# EUROPEAN PATENT APPLICATION

(11) **EP 1 450 071 A2**
(43) Date of publication of application: **25.08.2004**
(21) Application number: 04003877.0
(22) Date of filing: 20.02.2004
(51) Int. Cl.: F16H 55/06, B29D 15/00

(54) **Precision molded gears for paper conveying mechanisms**

(30) Priority: 21.02.2003 US 372608
(71) Applicant: Xerox Corporation, Rochester, New York 14644 (US)
(72) Inventor: Mastro, Paul F., Little Rock, AR 72223 (US)
(74) Representative: Grünecker, Kinkeldey, Stockmair & Schwanhäusser Anwaltssozietät

(57) **Abstract**

A precision gear for a drive mechanism in a sheet material feeding and processing device that is formed of a plastic material. The gear material has a microcellular foam structure with micro-cells having a diameter of less than 50 microns. The exposed surface of the gear is substantially void-free or free of exposed micro-cells. The invention thus contemplates a high precision, yet cost-effective gear for sheet material drive mechanisms.

The gear is produced using an inert blowing agent introduced into a molten stream of the plastic material. The inert agent is preferably nitrogen. The resulting micro-cells significantly reduce molded-in stresses and the gas-filled nature of the cells operates to level the internal pressure of the molten plastic as it flows into the detailed features of the gear.

One benefit is that a precision gear can be produced using known foam processing approaches and equipment. A further benefit is that the precision gear can be produced without incurring excessive production costs over conventional production of such precision gears.

A further benefit is that it allows the precision gear to be formed of plastic, thereby reducing material costs.

## Description

### Background of the Invention

The present invention relates to improvements to a drive mechanism useful for feeding or conveying sheet material. More specifically, the invention concerns the gear components of the drive mechanism and systems and methods for improving the precision and performance characteristics of these gear components.

Many devices rely upon drive mechanisms to feed sheet material or to convey sheet material through various processing stations. Such devices include copying machines and sheet printers. Copying machines generally consist of complex systems which feed in sheet material, such as paper, create a permanent image on the paper, and then deliver the finished copy to a document receiving tray. These copy machines include drive mechanisms not only for the input sheet material, but also for the sheet material that is being copied. Moreover, many copiers have the ability to generate double-sided copies, or produce single or double-sided copies from single or double-sided originals.

In small, low speed copy machines, the original document is supported on a movable platen or glass tray. The platen is reciprocated over a photoreceptor system that scans the image of the original document. The movement of the platen is governed by a drive mechanism. In larger copy machines, the document is placed on a stationary glass plate, while the photoreceptor system is oscillated. This motion too relies upon a drive mechanism.

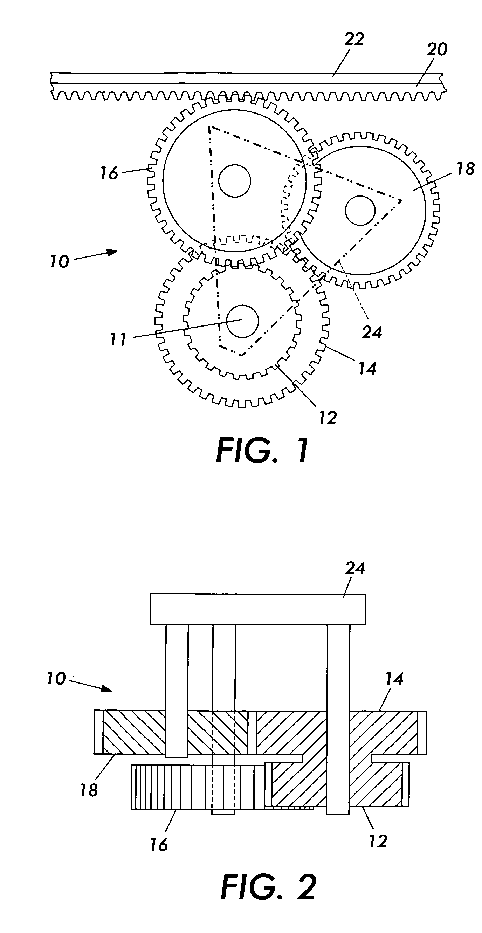

Regardless of the type of sheet feeding machine, or the manner of operation of the machine, each of the drive mechanisms includes a gear train to effectuate and control the particular movement. An exemplary gear train or gear assembly 10 for a multiple speed drive mechanism is shown in FIGS. 1 and 2. This gear assembly includes an input shaft 11 that rotates upper and lower input gears 12, 14. First and second drive gears 16, 18 selectively transmit power from the input gears to a rack 20 that supports a platen 22. In this example, the gears 12, 14, 16 and 18 are rotatably mounted to a support plate 24. The support plate can be manipulated to vary the engagement of gears 12 and 16, or gears 14 and 18, to vary the speed and direction of movement of the platen 22 via the rack 20.

The gear assembly 10 of FIGS. 1-2 is but one example of a gear train used in sheet conveying and processing devices, such as a copier. Other devices, such as paper printers for PCs, utilize gear trains to control the direction and speed of rotation of rollers that are used to convey and redirect sheet material for printing. The drive mechanisms in these latter devices can be similar to the gear assembly 10, and of like or greater complexity.

In these sheet feeding devices, the individual gears of the gear assemblies are a critical element of the mechanism. The gears are called upon to rotate and mesh with unchanging accuracy over many thousands of runs. Thus, the gears are susceptible to wear and fatigue, which might suggest that the gear components should be formed of a hard metal. However, production volume and cost of materials are critical factors in the design of copiers and printers. These two factors have led to the use of plastic in the production of drive mechanism gears for devices that rely upon feeding sheet material.

Plastic gears have been found to be extremely cost-effective and easy to mass produce. On the other hand, plastic gears can be the source of excessive noise as the plastic gears rotate and mesh. In addition, traditional plastic gears cannot be produced to high tolerances or precision. As the sheet processing devices become more sophisticated, greater precision in the movement of the processing and feeding components is required. The conventional injection molded plastic gear has thus far been unable to meet these high precision demands, while still maintaining their cost-effectiveness. What is needed is a system and process that permits cost-effective production of precise or highly-toleranced plastic gears for use in sheet processing devices such as printers and copiers.

### Summary of the Invention

In order to address this need, the present invention provides a precision gear for a drive mechanism in a sheet material feeding and processing device that is formed of a plastic material. The gear material has a microcellular foam structure with micro-cells having a diameter of less than 50 microns. In one feature of the invention, the exposed surface of the gear is substantially void-free or free of exposed micro-cells. The invention thus contemplates a high precision, yet cost-effective gear for sheet material drive mechanisms.

In accordance with one aspect of the invention, the gear is produced using an inert blowing agent introduced into a molten stream of the plastic material. The inert agent is preferably nitrogen. The resulting micro-cells significantly reduce molded-in stresses and the gas-filled nature of the cells operates to level the internal pressure of the molten plastic as it flows into the detailed features of the gear.

One benefit of the invention is that a precision gear can be produced using known foam processing approaches and equipment. A further benefit is that the precision gear can be produced without incurring excessive production costs over conventional production of such precision gears.

A further benefit is that the present invention allows the precision gear to be formed of plastic, thereby reducing material costs. Other objects and benefits of the invention will become apparent upon consideration of the following written description and accompanying figures.

### Description of the Figures

FIG. 1 is a plan-view representation of a gear assembly for use in a drive mechanism for a sheet material processing device.
FIG. 2 is a side view of the gear assembly shown in FIG. 1.
FIG. 3 is a side view of a system for producing a precision plastic gear in accordance with a preferred embodiment of the invention.
FIG. 4 is a representation of a plastic gear produced by the system of FIG. 3, with an enlarged depiction of the interior of the gear.

### Description of the Preferred Embodiment

While the invention has been illustrated and described in detail in the drawings and foregoing description, the same should be considered as illustrative and not restrictive in character. It is understood that only the preferred embodiments have been presented and that all changes, modifications and further applications that come within the spirit of the invention are desired to be protected.

The present invention contemplates a precision plastic gear that can be used in the drive mechanisms for various sheet feeding and processing devices, such as printers and copiers. The system and method of this invention provide plastic gears having unprecedented dimensional stability and precision. In addition, the gears have superior strength and wear properties versus prior known injection molded gears, and operate with considerably less meshing noise than prior gear trains.

In accordance with one feature of the invention, the gears for the gear train, such as the gears 12, 14, 16 and 18 shown in FIG. 1, are produced using a MuCell™ microcellular foam process developed by Trexel, Inc., of Woburn, Massachusetts. The principles of this process is described in U.S. Patent No. 6,169,122, issued on January 2, 2001, and the disclosure of which is incorporated herein by reference.

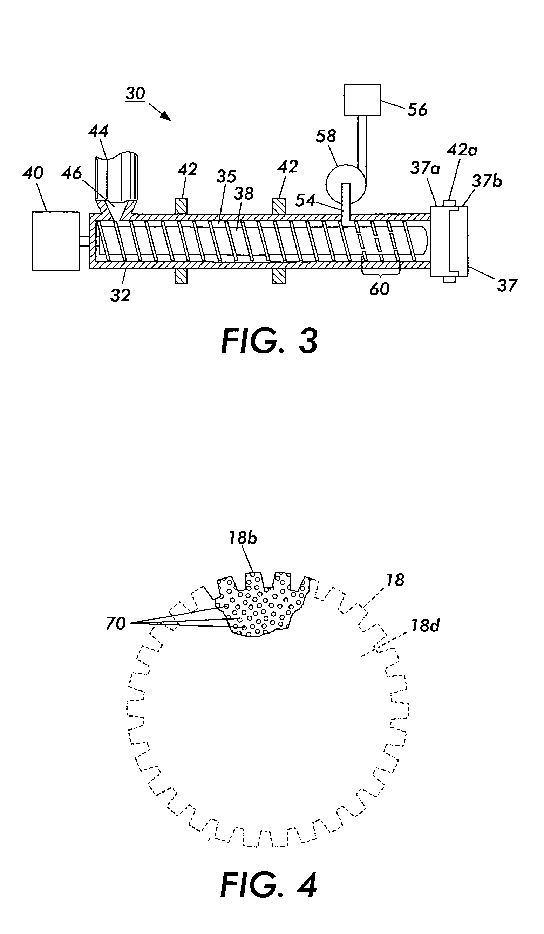

In accordance with the present invention, a precision molding system 30 implementing the MuCell™ process in the production of precision plastic gears is depicted in FIG. 3. In general terms, the molding system 30 utilizes a blowing agent to induce a microcellular foam structure to the plastic as it enters the gear mold. Thus, the system 30 can include a barrel 32 supporting a conveyor screw 38. The barrel and screw define a processing space 35 therebetween through which molten plastic is conveyed towards a gear die assembly 37. The die assembly 37 can include movable die halves 37a, 37b of conventional design. Specifically, the die halves define the precision features of the plastic gear product. The die assembly 37 can include such inserts as may be dictated by the particular gear configuration. In an alternative embodiment, the die assembly can be an extrusion die. In this case, a continuous extruded gear can be further processed to cut the extrudate into individual gears.

The precision molding system 30 includes a hopper 44 that gravity feeds the plastic feed material through a control orifice 46 into the processing space 35. The feed material can be provided in pelletized form and can include a blend of pelletized material. Thermal control units 42 can be dispersed along the length of the barrel 32 and at the die assembly 37 to melt the plastic feed material and maintain the material at an optimum temperature for operation of the blowing agent. In a preferred embodiment, the plastic can be any variety of semi-crystalline or polymeric material, such as polypropylene or high-density polyethylene.

The plastic feed material most preferably includes a nucleating agent that promotes formation of nucleation sites within a single-phase homogenous solution. This nucleating agent can be talc or other filler particles that constitute between 2.5-7 weight percent of the final plastic gear product. The preferred nucleating agents are inorganic solids, such as talc or calcium carbonate.

The blowing agent obtained from a pressurized source 56 and is introduced through a port or ports 54 into the processing space by way of a metering device 58. The blowing agent is an inert gas that is compatible with the plastic feed material. A preferred blowing agent is gaseous nitrogen or carbon dioxide, most preferably in a supercritical state.

The blowing agent or gas is directed to a mixing section 60 of the feed screw 38. The screw is rotated by a drive motor 40 so that the melted plastic feed material is continuously and uniformly exposed to the blowing agent at the port(s) 54. In a typical embodiment, the motor 40 rotates the screw 38 at about 30 rpm. The screw 38 in the mixing section 60 can define multiple flights, as shown in FIG. 3 to provide optimum distribution of the blowing agent throughout the molten feed material.

The metering device 58 is operable to control the mass flow rate of the blowing agent relative to the feed rate of the molten plastic. In a preferred embodiment, the blowing agent constitutes less than about 15% by weight of the molten plastic stream entering the die assembly 37. In a preferred embodiment, the blowing agent, or inert gas, is introduced at rates of 0.2 to 12 Ibs/hr at pressures up to 5500 psi, depending upon the type of plastic and nucleating agent in the feed material.

As explained in more detail in the above incorporated patent 6,169,122, the precision molding system 30 produces a plastic gear having a microcellular semi-crystalline foam structure. A gear produced in accordance with the present invention, such as gear 18 shown in FIG. 4, includes a plurality of gas-filled cells uniformly dispersed throughout the plastic material.

In accordance with the present invention, it has been found that molded plastic gears having cells with diameters between 5 and 50 microns provide optimum properties for use as part of a drive assembly in a sheet material feeding and processing device. More specifically, it has been found that micro-cell dimensions in this range significantly reduce molded-in stresses that are commonly associated with traditional injection molding processes. It is believed the internal pressure of the gas-filled micro-cells has a leveling effect on the internal pressure of the molten plastic is it flows into the detailed features of the gear, such as the teeth 18b or hub 18a (FIG. 4). This leveling effect also allows the molten plastic to consistently replicate the gear form in the die assembly 37.

As a further aspect of the invention, it has been discovered that by carefully controlling the mold temperature, by way of the thermal control unit 42a (FIG. 3), the surface of the gear product can be virtually void-free. In other words, proper temperature control as the molten, gas cell filled plastic is introduced into the die assembly and cooled virtually eliminates the presence of exposed micro-cells on the surface of the gear. This leads to a lower maximum and average surface roughness for the gear, which in turn leads to a longer gear life and considerably less gear mesh noise.

## Claims

1. A precision gear for a drive mechanism in a sheet material feeding and processing device, the gear formed of a plastic material and having a microcellular foam structure with micro-cells having a diameter of less than 50 microns.

2. The precision gear according to claim 1, wherein the gear is produced using an inert blowing agent introduced into a molten stream of the plastic material.

3. The precision gear according to claim 2, wherein the blowing agent is nitrogen.

4. The precision gear according to claim 1, wherein the exposed surface of the gear is substantially void-free or free of exposed micro-cells.
